# EUROPÄISCHE PATENTSCHRIFT

(11) **EP 2 336 252 B1**
(45) Veröffentlichungstag und Bekanntmachung des Hinweises auf die Patenterteilung: **24.08.2011**
(21) Anmeldenummer: 09180027.6
(22) Anmeldetag: 18.12.2009
(51) Int. Cl.: C09D 13/00

(54) **Malmine**
Lead for painting
Mine pour dessiner

(43) Veröffentlichungstag der Anmeldung: 22.06.2011
(73) Patentinhaber: Faber- Castell AG, 90546 Stein (DE)
(72) Erfinder: Appel, Reiner, 90522, Oberasbach (DE); Lugert, Dr. Gerhard, 90431, Nürnberg (DE); von Godin, Harald, 90522, Oberasbach (DE); Kinzel, Joachim, 90547, Stein (DE)
(74) Vertreter: Mörtel & Höfner

(56) Entgegenhaltungen:
- EP-A1- 0 435 386
- US-A- 2 319 585
- US-A1- 2006 062 906

## Beschreibung

Die Erfindung betrifft eine Malmine, wobei darunter die Mine eines Stifts, beispielsweise eines Holzstifts, und eine Kreide, die etwa mit einer Papier- oder Folienumhüllung verwendet wird, zu verstehen ist. Ein mit einer solchen Malmine ausgerüsteter Stift oder eine Malkreide dienen dazu, auf einer Unterlage wie Papier vor allem flächenförmige Abstriche zu erzeugen. Ein besonderer, vor allem Kinder ansprechender Überraschungseffekt ist damit nicht verbunden. Etwas interessanter in der Anwendung sind Aquarellminen. Diese bestehen aus einer wasserlöslichen Minenmasse, so dass ein damit erzeugter Farbauftrag nachträglich durch Behandlung mit Wasser angelöst und mit einem Pinsel auf der Unterlage verteilt werden kann. Dabei bleibt aber die ursprüngliche Farbe der Mine im Wesentlichen erhalten. Weiterhin sind Minen bekannt, die aus unterschiedlich gefärbten Strängen bestehen. Es können mehrfarbige Abstriche erzeugt werden, wobei je nach Schräg- und Drehstellung der Mine von den einzelnen Farbsträngen unterschiedliche Mengen auf die Unterlage übertragen werden, so dass sich Farbnuancen bzw. Farbmischungen erzeugen lassen.

Aufgabe der Erfindung ist es, eine alternative Farbmine vorzuschlagen, mit der sich überraschende Farbeffekte erzeugen lassen.

Diese Aufgabe wird durch eine Mine nach Anspruch 1 sowie eine Verwendung nach Anspruch 16 gelöst. Eine erfindungsgemäße Malmine weist eine wasserunlösliche Minengrundmasse auf, in der ein wasserlöslicher Farbstoff in fester Form, etwa als Pulver, enthalten ist. Eine derartige Malmine ermöglicht ein völlig neues Malverfahren mit einem überraschenden Farbeffekt. Aufgrund der wasserunlöslichen Minengrundmasse wird mit der Malmine ein am Maluntergrund haftender Abstrich erzeugt. Die Minengrundmasse ist die Masse einer Mine, die ihr die jeweilige Form, Konsistenz, mechanische und im Wesentlichen auch chemische Eigenschaften verleiht, die den Hauptanteil der Mine bildet. Eine Minengrundmasse der vorliegenden Art ist somit aus einem wasserunlöslichen Bindemittel und ebensolchen Beimengungen bzw. Minenbestandteilen wie etwa anorganische oder organischen Füllstoffpartikeln, Gleitmitteln z.B. auf Fettsäurebasis und sonstigen wachs- oder fettartige Zusatzstoffen gebildet. Die in der wasserunlöslichen Minengrundmasse enthaltenen Farbstoffe bzw. Farbstoffpartikel können aufgrund ihrer Wasserlöslichkeit z.B. mit einem Pinsel oder einem Schwämmchen aus der Minenmasse herausgelöst und auf dem Farbauftrag mehr oder weniger verteilt werden, wobei dessen Farbeindruck insgesamt oder begrenzt auf einzelne Flächenbereiche verändert werden kann. Nicht vorhersehbar war, dass sich die Farbstoffe aus der Minenmasse herauslösen lassen, obwohl sie in der wasserunlöslichen Matrix der Minengrundmasse eingebettet sind. Beim Erzeugen eines Minenabstrichs auf einer Unterlage werden die Farbstoffpartikel vermutlich teilweise freigelegt, so dass sie mit dem Wasser in Berührung kommen können. Unterstützt wird die Auflösung der Farbstoffe auch durch die in der Mine enthaltenen Füllstoffe, die ihr in gewisser Weise eine poröse, das Vordringen von Wasser zu Farbstoffen erleichternde Konsistenz verleihen.

Mit Hilfe eines etwa einen Pinsel oder ein Schwämmchen aufweisenden Auftragsgerätes lassen sich somit Bereiche auf der mit Minenmasse eingefärbten Fläche erzeugen, die eine von der Farbe der Minenmasse abweichende, vorher nicht sichtbare Färbung aufweisen. Diese Bereiche müssen nun aber nicht etwa in aufwändiger Weise getrocknet werden, sondern das Wasser wird von der Malunterlage - in der Regel werden saugfähige Unterlagen wie Papier verwendet - aufgesaugt, wobei der Farbstoff nun die Unterlage anfärbt. Auf diese Weise lassen sich vielfältige, sich aus dem Farbunterschied zwischen dem Abstrich und dem mit dem wasserlöslichen Farbstoff angefärbten Untergrund ergebende dauerhafte Farbeffekte erzeugen. Das Aufsaugen der wässrigen Farbstofflösung durch den Maluntergrund ist möglich, weil die mit einer Malmine der vorliegenden Art erzeugten Abstriche die Malunterlage nicht vollständig überdecken. Vielmehr entstehen bei einem Minenabstrich Lücken, auch solche die mit dem bloßen Auge nicht sichtbar sind, über die das Wasser zur Malunterlage vordringen kann. Dabei bewirken auch die in der Minenmasse vorhandenen Füllstoffe eine gewisse Porosität und damit Wasserdurchlässigkeit.

Prinzipiell kann die wasserunlösliche Minenmasse aus beliebigen Substanzen bestehen, sofern sich damit eine auf einer Malunterlage abstreichbare Malmine herstellen lässt. Eine Malmine besteht ganz allgemein aus einem Bindemittel, welches die in der Mine vorhandenen Beimengungen wie Füllstoffe, Farbpigmente und Additive in einer Bindemittelmatrix einbettet. Vorzugsweise werden Bindemittel eingesetzt, die sich ohne Wasserzusatz zusammen mit den anderen Minenbestandteilen z.B. mit Schnellmischern oder Knetern, zu einer Masse verarbeiten lassen, die etwa im Wege der Extrusion zu Minensträngen geformt werden kann. Der wasserlösliche Farbstoff kann dann problemlos der Ausgangsmischung der Minenbestandteile zugesetzt werden, ohne dass die Gefahr besteht, dass er sich löst und die Minenmasse färbt. Ein späteres Behandeln mit Wasser bzw. Aquarellieren würde dann kaum noch den gewünschten Farbwechseleffekt hervorbringen. Als Bindemittel kommen auch Wachse und Fettsäurederivate bzw. Fette in Frage, die ebenfalls ohne Wasserzusatz mit den anderen Minenbestandteilen vermischbar sind. Schließlich sind insbesondere auch thermoplastische Kunststoffe wie Polystyrol, Styrol-Acrylnitril, Polypropylen, Acryl-Butadien-Styrol, Styrol-Acrylnitril etc. geeignet. Derartige Bindemittel werden mit den weiteren Minenbestandteilen wie Füllstoffen, Gleitmitteln und Farbmitteln bei Temperaturen vermischt, bei denen das Bindemittel erweicht bzw. schmilzt. Ein besonders bevorzugtes Bindemittel ist Polyvinylbutyral (PVB). Dieser Kunststoff hat neben seiner Umweltverträglichkeit und toxikologisch Unbedenklichkeit den Vorteil, dass er bereits bei Temperaturen um 120 °C zu schmelzen beginnt, während die o.g. Kunststoffe erst bei Temperaturen ab 180 °C erweichen und sich extrudieren lassen. Temperaturempfindliche Bestandteile, vor allem temperaturempfindliche Farbstoffe, lassen sich dabei kaum noch verarbeiten ohne Schaden zu nehmen. Eine PVB als Bindemittel enthaltende Minenmasse kann dagegen schon bei Temperaturen um 120 °C zu Minen extrudiert werden, einer Temperatur, welcher die meisten wasserlöslichen Farbstoffe standhalten. Vorteilhaft ist weiterhin, dass PVB im Vergleich zu anderen thermoplastischen Kunststoffen eine größere Bindefähigkeit aufweist und daher weniger PVB erforderlich ist, um eine bestimmte Menge an z.B. partikelförmigen Minenbestandteilen zu binden oder eine Mine mit einem bestimmten Durchmesser herzustellen. Daher können mit PVB als Bindemittel Minen mit hohem Anteil an Farbstoffen und Farbpigmenten, also mit hoher Farbintensität und hoher mechanischer Stabilität hergestellt werden. Schließlich ist bei PVB als Bindemittel enthaltenden Minen von Vorteil, dass diese sich angenehm leicht, also mit geringem Kraftaufwand unter Bildung gleichmäßiger Abstriche auf einer Malunterlage abstreichen lassen.

Unter einem Anteil von 1 % (Prozentangaben hier und an anderer Stelle sind Gewichtsprozent) lassen sich Minen mit einer ausreichenden Festigkeit und einem zufriedenstellendem Abstrichverhalten kaum noch herstellen. Bei einem Bindemittelanteil von mehr als 60 % Bindemittel zeigen die Minen in der Regel ein zu hartes Abstrichverhalten. Aufgrund des hohen Bindemittelanteils ist der für einen Farbstoff verbleibende Rest, es sind ja auch noch andere Bestandteile, vor allem Füllstoffe in größeren Mengen vorhanden, zu gering, als dass damit ein deutlicher Farbeffekt bei der Behandlung eines Farbauftrags mit Wasser erzielbar wäre. Daher wird bei den Minen ein Bindemittelbereich von 1 % bis 60% eingehalten. Im Fall von PVB, das, wie gesagt, in deutlich geringerer Menge als andere thermoplastische Bindemittel vorhanden sein muss, gilt hinsichtlich der 1 %-Untergrenze das oben Gesagte entsprechend. Im Fall von PVB kann dessen Anteil in der Minenmasse geringer sein, so dass dieser vorzugsweise auf 40 % begrenzt ist.

Zur weiteren Optimierung der Minenkonsistenz und des Abstrichverhaltens sind wenigstens ein Gleitmittel in Form eines Fettsäuresalzes, insbesondere ein Stearinsäuresalz, sowie weitere Bestandteile wie Wachse und Öle in der Mine vorhanden. Vorzugsweise sind 0,1 % bis zu 20 % Gleitmittel und 5 % bis 35 % Wachse und/oder Öle enthalten.

Manche wasserlöslichen Farbstoffe benötigen einen bestimmten pH-Wert-Bereich. In solchen Fällen enthält nach einer weiteren bevorzugten Ausführungsvariante die Mine einen pH-Wert-Regler, worunter ein Säure, eine Base oder ein Amphoter zu verstehen ist. Beim Behandeln eines Minenabstrichs mit Wasser wird der pH-Wert-Regler zusammen mit dem Farbstoff aus der Minengrundmasse herausgelöst und verändert den pH-Wert des Wassers. Beispielsweise ist hier der Farbstoff CI 59040 (solvent green 7) zu nennen, der ein basisches Milieu benötigt. Zur Erhöhung des pH-Werts wird vorzugsweise ein Alkalisierungsmittel zugegeben, das bei erhöhten Temperaturen keine Gasentwicklung zeigt, was bei Natriumphosphat der Fall ist. Ein Karbonat wäre zwar ebenfalls als Alkalisierungsmittel geeignet, würde aber bei den erhöhten Temperaturen im Bereich von 120 °C bis wenigstens 200 °C, bei denen eine Minenmasse der vorliegenden Art zu Strängen extrudiert wird, Kohlendioxid abspalten, was die Minen aufgrund von Gaseinschlüssen unbrauchbar machen würde.

Desweiteren gibt es Farbstoffe, deren Farbe erst durch Zusammenwirken mit einem im wässrigen Medium vorhandenen Stoff zur vollen Entfaltung kommt. Dies ist bei dem o.g. solvent green 7 der Fall. Dessen fluoreszierend gelbe Farbe entsteht verstärkt erst bei Gegenwart eines Zuckers, beispielsweise von Saccharose.

Zur Herstellung der im Folgenden beschriebenen Ausführungsbeispiele werden die Minenbestandteile in Schnellmischern, Zweischneckenextrudern o.dgl. innig vermischt, wobei dies bei Temperaturen erfolgt, bei der die eingesetzten thermoplastischen Bindemittel derart erweichen bzw. schmelzen, dass sie sich innig mit den anderen Minenbestandteilen vermischen lassen. Je nach dem verwendeten Bindemittel sind mehr oder weniger hohe Temperaturen sowohl für den Mischvorgang als auch für die Extrusion von Minensträngen erforderlich. Im Falle von Kunststoffen wie Polystyrol, Acryl-Butadien-Styrol, Polypropylen, Styrol-Acrylnitril und dergleichen sind relativ hohe Verarbeitungstemperaturen von meist mehr als 200 °C erforderlich. Bei den PVB als Bindemittel verwendenden Formulierungen dagegen liegen die Verarbeitungstemperaturen weit niedriger, nämlich in einem Bereich um 120 °C, was vorteilhaft ist im Falle temperaturempfindlicher Bestandteile. Nach dem Vermischen wird entweder ein Granulat erhalten, das anschließend zu Minen extrudiert wird oder die Minenmasse wird nach dem Durchmischen ohne den Zwischenschritt einer Granulatherstellung sofort zu Minensträngen extrudiert. Nach der Extrusion werden die Minenstränge abgelängt und mit einer Umhüllung z.B. aus Holz ummantelt oder - im Falle von Kreiden - mit einer folienartigen Umhüllung versehen.

Wird ein mit einer Mine der vorliegenden Art erzeugter Abstrich auf einer Malunterlage mit Wasser behandelt, etwa so wie dies beim Aquarellieren eines mit wasserlösliche Farbminen erzeugten Abstrichs der Fall ist, werden die wasserlöslichen Farbstoffe herausgelöst. Ein auf einer z.B. aus Papier bestehenden Malunterlage erzeugtes Bild weist dann durch die Minenabstriche gegebene Strukturen mit der Grundfarbe der Minenmasse auf, wobei der Maluntergrund, der die durch das Aquarellieren gebildete Farblösung aufgesaugt hat, anders gefärbt ist. Dadurch ergeben sich vielfältige Gestaltungsmöglichkeiten z.B. auch dadurch, dass für ein Bild mehrere Farbminen mit unterschiedlichen Farben der Minengrundmasse und unterschiedlichen wasserlöslichen Farbstoffen verwendet werden.

### Beispiel 1:

Mine mit grauer Grundfarbe und leuchtend gelbem wasserlöslichem Farbstoff, Durchmesser 4,0 mm:

| | |
|---|---|
| Polyvinylbutyral: | 2 % |
| Graphit | 35 % |
| Kaolin | 44 % |
| Calciumstearat | 5 % |
| Stearinsäure | 5 % |
| Natriumphosphat (Na₃PO₄) | 1 % |
| Saccharose | 5 % |
| CI 59040 | 3 % |

Die graue Grundfarbe der Mine wird durch die Zugabe von Graphitpulver erreicht. Der verwendete Farbstoff CI 59040 wird beim Behandeln eines Minenabstrichs mit Wasser bzw. beim Aquarellieren gelöst. Dabei werden auch das Natriumphosphat und Saccharose aus dem Abstrich herausgelöst, wodurch der Farbstoff erst seine leuchtend gelbe Farbe voll entfaltet.

### Beispiel 2:

Mine mit grauer Grundfarbe und mit zwei wasserlöslichen Farbstoffen, Durchmesser 3,3 mm:

| | |
|---|---|
| Polyvinylbutyral CAS 68648-78-2 | 7,5 % |
| Calciumstearat | 12,0 % |
| N,N'-Ethylene bis Stearatamide CAS 110-30-5 | 6,0 % |
| Neutrales Kohlenstoffwachs | 1,8 % |
| Kaolin | 30,9 % |
| Rhizinusöl | 1,8 % |
| Graphit | 30,0 % |
| Farbstoff CI 42090 (blau) | 2,0 % |
| Farbstoff CI 19140 (gelb) | 8,0 % |

Auch bei dieser Mine wird eine graue Minengrundfarbe durch Zugabe von Graphit erreicht. Die durch Aquarellieren aus einem Minenabstrich herausgelösten Farbstoffe ergeben die Mischfarbe grün.

### Beispiel 3:

Mine mit blauvioletter Grundfarbe und mit rotem, wasserlöslichem Farbstoff, Durchmesser 4,0 mm:

| | |
|---|---|
| Bindemittel Styrol-Acrylnitril (SAN) | 15 % |
| Wachs (z.B. Canaubawachs) | 10 % |
| Palmöl | 2 % |
| Wasserunlösliches Pigment CI 74160 (blauviolett) | 6 % |
| Wasserlösllicher Farbstoff CI 45410 (rot) | 20 % |
| Füllstoff Talkum | 47 % |

Das die Minenmasse blauviolett färbende Pigment CI 74160 - ein Phthalocyaninpigment - ist wasserunlöslich, löst sich somit beim Aquarellieren nicht aus der Minengrundmasse heraus. Durch das Aquarellieren eines Minenabstrichs löst sich nur der rote Farbstoff.

### Beispiel 4:

Mine mit orange-brauner Grundfarbe und mit blauem, wasserlöslichem Farbstoff. Durchmesser der Mine 3,0 mm:

| | |
|---|---|
| Bindemittel Polyvinylbutyral CAS 68648-78-2 | 10,0 % |
| Zinkstearat | 10,0 % |
| Paraffinwachs | 8,0 % |
| Kaolin | 58,0 % |
| Pigment CI 71105 | 10,0 % |
| Blauer Farbstoff CI 42090 | 4,0 Gew.% |

Die orange-braune Grundfarbe der Minenmasse wird durch das wasserunlösliche Pigment CI 71105 erreicht.

### Beispiel 5:

Mine mit orange-brauner Grundfarbe und mit blauem, wasserlöslichem Farbstoff. Durchmesser der Mine 2,5 mm:

| | |
|---|---|
| Bindemittel Polyvinylbutyral CAS 68648-78-2 | 36,0 % |
| Zinkstearat | 12,0 % |
| Paraffinwachs | 8,0 % |
| Kaolin | 28,0 % |
| Pigment CI 71105 | 12,0 % |
| Blauer Farbstoff CI 42090 | 4,0 % |

Die Mine entspricht hinsichtlich der eingesetzten Farbmittel Beispiel 4, unterscheidet sich aber davon vor allem durch einen höheren Gehalt an PVB und einer geringeren Menge an Füllstoff.

### Beispiel 6:

Kreide mit orange-brauner Grundfarbe und mit blauem, wasserlöslichem Farbstoff. Durchmesser der Kreide 8,0 mm:

| | |
|---|---|
| Bindemittel Polyvinylbutyral CAS 68648-78-2 | 7,0 % |
| Zinkstearat | 10,0 % |
| Paraffinwachs | 9,0 % |
| Kaolin | 60,0 % |
| Pigment CI 71105 | 10,0 % |
| Blauer Farbstoff CI 42090 | 4,0 % |

Es handelt sich hier um eine Mine bzw. eine Kreide mit einer Zusammensetzung, die im Wesentlichen jener von Beispiel 4 entspricht, wobei jedoch der Gehalt an PVB geringer ist.

### Beispiel 7:

Mine mit grauer Grundfarbe und leuchtend blauem wasserlöslichem Farbstoff, Durchmesser 4,0 mm:

| | |
|---|---|
| Polystyrol (Standard PS): | 46 % |
| Graphit | 35 % |
| Calciumstearat | 5 % |
| Stearinsäure | 5 % |
| Blauer Farbstoff CI 42090 | 9 % |

Die graue Grundfarbe der Mine wird durch die Zugabe von Graphitpulver erreicht. Der verwendete Farbstoff CI 42090 wird beim Behandeln eines Minenabstrichs mit Wasser bzw. beim Aquarellieren gelöst.

## Patentansprüche

1. Malmine, **gekennzeichnet durch** eine wasserunlösliche Minengrundmasse, in der ein thermoplastisches Bindemittel, ein wasserunlösliches Farbpigment und ein wasserlöslicher Farbstoff enthalten sind.

2. Malmine nach Anspruch 1,
**dadurch gekennzeichnet,**
**dass** das Bindemittel mit einem Anteil von 1 % bis 60 % enthalten ist.

3. Malmine nach Anspruch 2,
**dadurch gekennzeichnet,**
**dass** als Bindemittel Polyvinylbutyral enthalten ist.

4. Malmine nach Anspruch 3,
**gekennzeichnet durch**
einen Anteil an Polyvinylbutyral von 1 % bis 40 %.

5. Malmine nach einem der vorhergehenden Ansprüche,
**dadurch gekennzeichnet,**
**dass** ein Gleitmittel enthalten ist.

6. Malmine nach Anspruch 5,
**dadurch gekennzeichnet,**
**dass** ein Fettsäuresalz als Gleitmittel enthalten ist.

7. Malmine nach Anspruch 6,
**dadurch gekennzeichnet,**
**dass** sie ein Stearinsäuresalz enthält.

8. Malmine nach Anspruch 5, 6 oder 7,
**gekennzeichnet durch**
einen Anteil an Gleitmittel von 0,1 % bis 20 %.

9. Malmine nach einem der vorhergehenden Ansprüche,
**dadurch gekennzeichnet,**
**dass** ein Wachs enthalten ist.

10. Malmine nach einem der vorhergehenden Ansprüche,
**dadurch gekennzeichnet,**
**dass** ein Öl enthalten ist.

11. Malmine nach Anspruch 10,
**dadurch gekennzeichnet,**
**dass** Rhizinusöl enthalten ist.

12. Mine nach Anspruch 9, 10 oder 11,
**gekennzeichnet durch**
einen Gehalt an Wachs und/oder Öl von 5 % bis 35 %.

13. Mine nach einem der vorhergehenden Ansprüche,
**dadurch gekennzeichnet,**
**dass** sie einen wasserlöslichen pH-Wert-Regler enthält.

14. Mine nach einem der vorhergehenden Ansprüche,
**dadurch gekennzeichnet,**
**dass** sie ein die Farbe des Farbmittels verstärkendes wasserlösliches Mittel enthält.

15. Verwendung einer Malmine nach einem der vorhergehenden Ansprüche für ein Malverfahren, bei dem eine Fläche einer Malunterlage mit der Mine bemalt und anschließend mit Hilfe eines Auftragsgeräts mit Wasser in Kontakt gebracht wird, um einen in der Mine enthaltenen Farbstoff aus der Minenmasse herauszulösen und auf der bemalten Fläche zu verteilen.

16. Verwendung nach Anspruch 15,
**dadurch gekennzeichnet,**
**dass** ein Pinsel oder ein Schwämmchen als Auftragsgerät verwendet wird.

17. Verwendung nach Anspruch 15 oder 16,
**gekennzeichnet durch**
eine Malunterlage aus Papier.

## Claims

1. Lead for painting, **characterized by** a water-insoluble lead basic mass in which a thermoplastic binder, a water-insoluble colored pigment and a water-soluble dye are present.

2. Lead for painting according to Claim 1,
**characterized in that**
the binder is present in a fraction of 1% to 60%.

3. Lead for painting according to Claim 2,
**characterized in that**
polyvinylbutyral is present as binder.

4. Lead for painting according to Claim 3,
**characterized by**
a fraction of polyvinylbutyral of 1% to 40%.

5. Lead for painting according to any one of the preceding claims,
**characterized in that**
a lubricant is present.

6. Lead for painting according to Claim 5,
**characterized in that**
a fatty acid salt is present as lubricant.

7. Lead for painting according to Claim 6,
**characterized in that**
it comprises a stearic acid salt.

8. Lead for painting according to Claim 5, 6 or 7,
**characterized by**
a fraction of lubricant of 0.1% to 20%.

9. Lead for painting according to any one of the preceding claims,
**characterized in that**
a wax is present.

10. Lead for painting according to any one of the preceding claims,
**characterized in that**
an oil is present.

11. Lead for painting according to Claim 10,
**characterized in that**
castor oil is present.

12. Lead according to Claim 9, 10 or 11
**characterized by**
a content of wax and/or oil of 5% to 35%.

13. Lead according to any one of the preceding claims,
**characterized in that**
it comprises a water-soluble pH regulator.

14. Lead according to any one of the preceding claims,
**characterized in that**
it comprises a water-soluble agent which intensifies the color of the colorant.

15. Use of a lead for painting according to any one of the preceding claims for a painting method in which an area of a painting substrate is painted with the lead and then, with the help of an application device, is brought into contact with water in order to dissolve one dye present in the lead out of the lead mass and distribute it on the painted area.

16. Use according to Claim 15,
**characterized in that**
a brush or a sponge is used as application device.

17. Use according to Claim 15 or 16,
**characterized by**
a painting substrate made of paper.

## Revendications

1. Mine pour peindre, **caractérisée par** une composition de base de mine insoluble dans l'eau, dans laquelle sont contenus un liant thermoplastique, un pigment coloré insoluble dans l'eau et un colorant soluble dans l'eau.

2. Mine pour peindre suivant la revendication 1,
**caractérisée**
**en ce que** le liant est contenu en une proportion de 1% à 60%.

3. Mine pour peindre suivant la revendication 2,
**caractérisée**
**en ce que** du polyvinylbutyral est contenu comme liant.

4. Mine pour peindre suivant la revendication 3,
**caractérisée**
**par** une proportion de polyvinylbutyral de 1% à 40 %.

5. Mine pour peindre suivant l'une des revendications précédentes,
**caractérisée**
**en ce qu'**un agent lubrifiant est contenu.

6. Mine pour peindre suivant la revendication 5,
**caractérisée**
**en ce qu'**un sel d'acide gras est contenu comme agent lubrifiant.

7. Mine pour peindre suivant la revendication 6,
**caractérisée**
**en ce qu'**elle contient un sel de l'acide stéarique.

8. Mine pour peindre suivant la revendication 5, 6 ou 7,
**caractérisée**
**par** une proportion d'agent lubrifiant de 0,1% à 20%.

9. Mine pour peindre suivant l'une des revendications précédentes,
**caractérisée**
**en ce qu'**une cire est contenue.

10. Mine pour peindre suivant l'une des revendications précédentes,
**caractérisée**
**en ce qu'**une huile est contenue.

11. Mine pour peindre suivant la revendication 10, **caractérisée**
**en ce que** de l'huile de ricin est contenue.

12. Mine pour peindre suivant la revendication 9, 10 ou 11,
**caractérisée**
**par** une teneur en cire et/ou en huile de 5% à 35%.

13. Mine pour peindre suivant l'une des revendications précédentes,
**caractérisée**
**en ce qu'**elle contient un régulateur de pH soluble dans l'eau.

14. Mine pour peindre suivant l'une des revendications précédentes,
**caractérisée**
**en ce qu'**elle contient un agent soluble dans l'eau intensifiant la couleur du colorant.

15. Utilisation d'une mine pour peindre suivant l'une des revendications précédentes,
pour un procédé de peinture, dans lequel une surface d'un support pour peindre est peinte à l'aide de la mine et ensuite est mise en contact avec de l'eau à l'aide d'un appareil de dépôt pour séparer un colorant contenu dans la mine de la composition de mine et le répartir sur la surface peinte.

16. Utilisation suivant la revendication 15,
**caractérisée**
**en ce que** l'on utilise comme appareil de dépôt un pinceau ou une petite éponge.

17. Utilisation suivant la revendication 15 ou 16,
**caractérisée**
**par** un support pour peindre en papier.
